# EUROPEAN PATENT APPLICATION

(11) **EP 3 444 166 A1**
(43) Date of publication of application: **20.02.2019**
(21) Application number: 18188960.1
(22) Date of filing: 14.08.2018
(51) Int. Cl.: B62D 5/04

(54) **POWER STEERING SYSTEM**

(30) Priority: 16.08.2017 JP 2017157216
(71) Applicant: JTEKT Corporation, Osaka-shi, Osaka 542-8502 (JP)
(72) Inventor: SUGIYAMA, Toyoki, Osaka-shi, Osaka 542-8502 (JP)
(74) Representative: Winter, Brandl, Fürniss, Hübner, Röss, Kaiser, Polte - Partnerschaft mbB

(57) **Abstract**

A power source device includes a switching circuit configured to switch the power supply mode between a first power supply mode, in which power is supplied to a drive circuit for an electric motor by only a main power source, and a second power supply mode, in which power is supplied to the drive circuit utilizing both the main power source and an auxiliary power source. A control device includes: a first control unit that controls the switching circuit on the basis of a value that matches power consumption by the drive circuit; and a second control unit that switches the power supply mode to a second power supply mode by controlling the switching circuit during sailing stop.

## Description

### BACKGROUND OF THE INVENTION

### 1. Field of the Invention

The present invention relates to a power steering system that includes an electric motor.

### 2. Description of Related Art

Japanese Patent Application Publication No. 2014-150672 (JP 2014-150672 A) discloses a power supply device configured to supply power to a drive circuit for an electric motor for an electric power steering (EPS) system. The power supply device described in JP 2014-150672 A includes a main power source, a single auxiliary power source, a charge circuit, and a switching circuit (discharge circuit). The single auxiliary power source is connected to the main power source. The charge circuit charges the auxiliary power source on the basis of the main power source. The switching circuit performs switching between a normal output voltage mode, in which power is supplied to the drive circuit by only the main power source, and a high-output voltage mode, in which power is supplied to the drive circuit utilizing both the main power source and the auxiliary power source through discharge of the auxiliary power source.

When a high load is imposed on the electric power steering system, the switching circuit sets a power supply mode to the high-output voltage mode. In this case, the auxiliary power source is in a discharge state. When a low load is imposed on the electric power steering system, on the other hand, the switching circuit sets the power supply mode to the normal output voltage mode, and charges the auxiliary power source.

In recent years, with an increasing tendency toward energy saving, more and more gasoline vehicles have been equipped with an idling stop function of stopping an engine when the vehicle is stationary. In addition, a control method called sailing stop is proposed in order to further improve fuel efficiency. The sailing stop is a control method in which the vehicle is caused to coast with power transfer from the engine to drive wheels blocked and with the engine stopped when a state in which the vehicle speed is equal to or more than a predetermined speed and an accelerator is not operated continues for a predetermined time, for example. During the sailing stop, there is no effect of engine friction or engine brake, and thus fuel efficiency can be improved. The sailing stop is canceled when the accelerator is operated.

In the gasoline vehicles, power is supplied to the electric power steering system by an alternator and a battery. In an electric power steering system applied to a 12-V power source voltage, a voltage of about 13.5 V is supplied to the electric power steering system by a power supply in which an alternator with an output voltage of about 13.5 V and a battery with an output voltage of about 12 V are connected in parallel with each other.

During the sailing stop, the engine is stopped, and thus power supply from the alternator is not expected. Therefore, only the battery supplies power to the electric power steering system. Consequently, the power source voltage is lowered during the sailing stop, and thus an assist function may be degraded.

### SUMMARY OF THE INVENTION

It is an object of the present invention to provide a power steering system that can suppress degradation in assist function during sailing stop.

An aspect of the present invention provides a power steering system that is mounted on a vehicle that includes a sailing stop function and that includes an electric motor, the power steering system including: a power source device; and a control device that controls the power source device, in which: the power source device includes a main power source, an auxiliary power source, and a switching circuit configured to switch a power supply mode between a first power supply mode, in which power is supplied to a drive circuit for the electric motor by only the main power source, and a second power supply mode, in which power is supplied to the drive circuit utilizing both the main power source and the auxiliary power source; and the control device includes a first control unit that controls the switching circuit on the basis of a value that matches power consumption by the drive circuit, and a second control unit that switches the power supply mode to the second power supply mode by controlling the switching circuit during sailing stop.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating a schematic configuration of an electric power steering system according to an embodiment of the present invention;
FIG. 2 is a circuit diagram illustrating the electrical configuration of the electric power steering system of FIG. 1;
FIG. 3A is a part of a flowchart illustrating operation of a power source control ECU; and
FIG. 3B is a part of the flowchart illustrating operation of the power source control ECU.

### DETAILED DESCRIPTION OF EMBODIMENTS

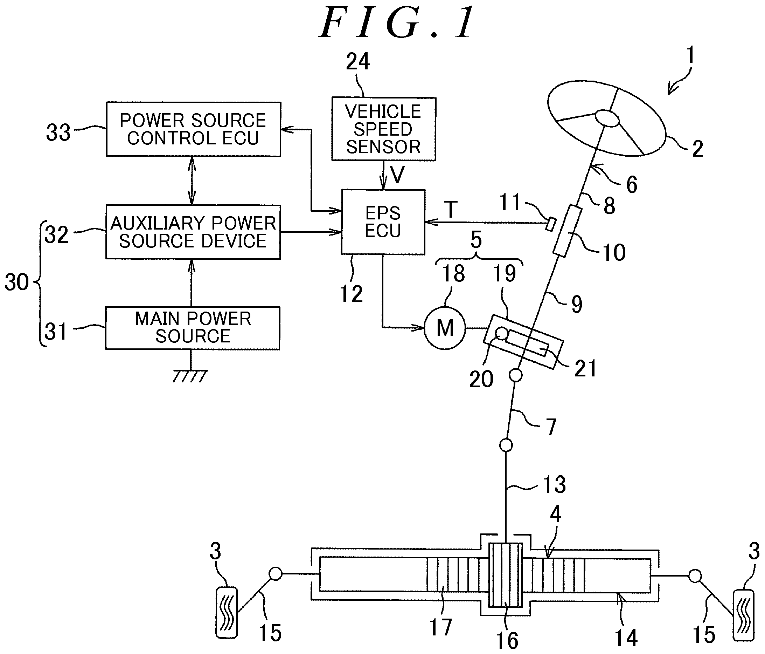

An embodiment of the present invention will be described in detail below with reference to the accompanying drawings. FIG. 1 is a schematic diagram illustrating a schematic configuration of an electric power steering (EPS) system according to an embodiment of the present invention. An electric power steering (EPS) system 1 is mounted on a vehicle that includes a sailing stop function. The sailing stop is a control method in which the vehicle is caused to coast with power transfer from an engine to drive wheels blocked and the engine stopped under the following travel conditions. The travel conditions are met when a state in which the vehicle speed is equal to or more than a predetermined speed and an accelerator is not operated continues for a predetermined time, when a state in which the vehicle speed is equal to or more than a predetermined speed and an accelerator and a brake are not operated continues for a predetermined time, etc. The sailing stop is canceled when the accelerator is operated.

The electric power steering system 1 includes a steering wheel 2, a steering operation mechanism 4, and a steering assist mechanism 5. The steering wheel 2 is a steering member configured to steer the vehicle. The steering operation mechanism 4 steers steered wheels 3 in conjunction with rotation of the steering wheel 2. The steering assist mechanism 5 assists a driver in steering. The steering wheel 2 and the steering operation mechanism 4 are mechanically coupled to each other via a steering shaft 6 and an intermediate shaft 7.

The steering shaft 6 includes an input shaft 8 and an output shaft 9. The input shaft 8 is coupled to the steering wheel 2. The output shaft 9 is coupled to the intermediate shaft 7. The input shaft 8 and the output shaft 9 are coupled so as to be rotatable relative to each other via a torsion bar 10. A torque sensor 11 is disposed in the vicinity of the torsion bar 10. The torque sensor 11 detects steering torque T applied to the steering wheel 2 on the basis of the amount of relative rotational displacement between the input shaft 8 and the output shaft 9. In the embodiment, the steering torque T which is detected by the torque sensor 11 is detected as a positive value when the vehicle is steered to the right, and as a negative value when the vehicle is steered to the left, and the magnitude of the steering torque T is larger as the absolute value of the positive or negative value is larger.

The steering operation mechanism 4 is composed of a rack-and-pinion mechanism that includes a pinion shaft 13 and a rack shaft 14 that serves as a steered shaft. The steered wheels 3 are coupled to end portions of the rack shaft 14 via tie rods 15 and knuckle arms (not illustrated). The pinion shaft 13 is coupled to the intermediate shaft 7. A pinion 16 is coupled to the distal end of the pinion shaft 13. The rack shaft 14 extends linearly along the right-left direction of the automobile. A rack 17 meshed with the pinion 16 is formed at an intermediate portion of the rack shaft 14 in the axial direction. The pinion 16 and the rack 17 convert rotation of the pinion shaft 13 into movement of the rack shaft 14 in the axial direction. The steered wheels 3 can be steered by moving the rack shaft 14 in the axial direction.

When the steering wheel 2 is operated (rotated), rotation of the steering wheel 2 is transferred to the pinion shaft 13 via the steering shaft 6 and the intermediate shaft 7. The pinion 16 and the rack 17 convert rotation of the pinion shaft 13 into movement of the rack shaft 14 in the axial direction. Consequently, the steered wheels 3 are steered. The steering assist mechanism 5 includes an electric motor 18 for steering assist, and a speed reducer 19 configured to transfer output torque from the electric motor 18 to the steering operation mechanism 4. The speed reducer 19 is composed of a worm gear mechanism that includes a worm gear 20 and a worm wheel 21 meshed with the worm gear 20.

The worm gear 20 is rotationally driven by the electric motor 18. The worm wheel 21 is coupled so as to be rotatable together with the steering shaft 6. The worm wheel 21 is rotationally driven by the worm gear 20. When the worm gear 20 is rotationally driven by the electric motor 18, the worm wheel 21 is rotationally driven to rotate the steering shaft 6. Rotation of the steering shaft 6 is transferred to the pinion shaft 13 via the intermediate shaft 7. The pinion 16 and the rack 17 convert rotation of the pinion shaft 13 into movement of the rack shaft 14 in the axial direction. Consequently, the steered wheels 3 are steered. That is, the worm gear 20 is rotationally driven by the electric motor 18 to enable steering assist by the electric motor 18.

The vehicle is provided with a vehicle speed sensor 24 configured to detect a vehicle speed V. The steering torque T which is detected by the torque sensor 11, the vehicle speed V which is detected by the vehicle speed sensor 24, and so forth are input to an EPS electronic control unit (ECU) 12. The EPS ECU 12 performs so-called assist control by controlling the electric motor 18 on the basis of such inputs.

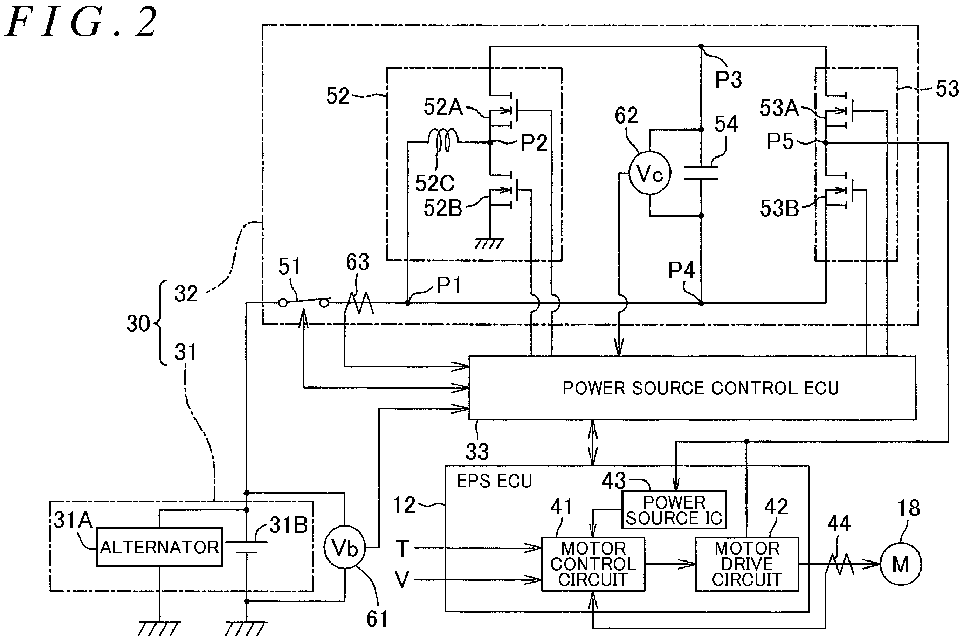

Power is supplied to a motor drive circuit 42 and a power source IC 43 (see FIG. 2) in the EPS ECU 12 by one or both of a main power source 31 and a capacitor (auxiliary power source) 54 (see FIG. 2) in an auxiliary power source device 32. The auxiliary power source device 32 is controlled by a power source control ECU 33. The EPS ECU 12 and the power source control ECU 33 are connected to each other via a communication line.

The main power source 31 and the auxiliary power source device 32 constitute a power source device 30. The power source control ECU 33 is an example of a control device that controls the power source device 30. FIG. 2 is a circuit diagram illustrating the electrical configuration of the electric power steering system 1. The EPS ECU 12 includes a motor control circuit 41, the motor drive circuit (inverter circuit) 42, and the power source IC 43. The motor control circuit 41 is composed of a microcomputer. The motor drive circuit 42 is controlled by the motor control circuit 41, and supplies power to the electric motor 18. The power source IC 43 generates power for the motor control circuit 41. The EPS ECU 12 receives an output signal from a current sensor 44 configured to detect a motor current that flows through the electric motor 18.

The motor control circuit 41 controls drive of the motor drive circuit 42 on the basis of the steering torque T, the vehicle speed V, and the motor current. The steering torque T is detected by the torque sensor 11. The vehicle speed V is detected by the vehicle speed sensor 24. The motor current is detected by the current sensor 44. Specifically, the motor control circuit 41 sets a target current value on the basis of the steering torque T and the vehicle speed V, and controls drive of the motor drive circuit 42 such that the motor current which flows through the electric motor 18 is equal to the target current value.

The main power source 31 is composed of an alternator 31A and a battery 31B. The alternator 31A converts a rotational force of the engine into electric energy. The battery 31B is connected in parallel with the alternator 31A. Although not illustrated, the alternator 31A is constituted from a power generation unit, a rectifier, and a voltage regulator as is well known (see Japanese Patent Application Publication No. 2006-191758 (JP 2006-191758 A), for example). The power generation unit has a stator coil and a field coil, and generates three-phase AC in the stator coil using a field current supplied to the field coil. The rectifier converts the three-phase AC into DC. The rectifier is connected to the battery 31B. The voltage regulator controls an output voltage from the alternator 31A by controlling the field current which is supplied to the field coil.

The auxiliary power source device 32 is connected in series with the main power source 31. The auxiliary power source device 32 includes a relay 51, a charge circuit 52, a discharge circuit 53, and a capacitor 54 that serves as an auxiliary power source. The relay 51 is disposed between the positive terminal of the main power source 31 and the charge circuit 52. A point of connection between the relay 51 and the charge circuit 52 is denoted by P1. The charge circuit 52 is a circuit configured to charge the capacitor 54. The charge circuit 52 includes a pair of switching elements 52A and 52B connected in series with each other, and a voltage boosting coil 52C connected between a point of connection P2 between the switching elements 52A and 52B and the point of connection P1. The switching elements 52A and 52B are n-channel MOSFETs.

The source of the upper switching element 52A is connected to the drain of the lower switching element 52B. The source of the lower switching element 52B is grounded. The drain of the upper switching element 52A is connected to the positive terminal of the capacitor 54. A point of connection between the upper switching element 52A and the positive terminal of the capacitor 54 is denoted by P3. The point of connection P1 is connected to the negative terminal of the capacitor 54. A point of connection between the point of connection P1 and the negative terminal of the capacitor 54 is denoted by P4.

The discharge circuit 53 is connected between the point of connection P3 and the point of connection P4. The discharge circuit 53 is composed of a pair of switching elements 53A and 53B connected in series with each other. The switching elements 53A and 53B are n-channel MOSFETs. The source of the upper switching element 53A is connected to the drain of the lower switching element 53B. The drain of the upper switching element 53A is connected to the point of connection P3. The source of the lower switching element 53B is connected to the point of connection P4. A point of connection P5 between the pair of switching elements 53A and 53B is connected to the motor drive circuit 42 and the power source IC 43 in the EPS ECU 12.

A terminal voltage (main power source voltage Vb) of the main power source 31 is detected by a first voltage sensor 61. A terminal voltage (capacitor voltage Vc) of the capacitor 54 is detected by a second voltage sensor 62. An output current (main power source current ib) from the main power source 31 is detected by a current sensor 63. The detection values from the voltage sensors 61 and 62 and the detection value from the current sensor 63 are input to the power source control ECU 33. An ignition state detection signal (not illustrated) that indicates the state of an ignition key is input to the power source control ECU 33. In addition, information that indicates whether or not the sailing stop is being performed is provided from a travel control ECU (not illustrated) to the power source control ECU 33.

The power source control ECU 33 controls on and off the relay 51 on the basis of the ignition state detection signal. When the ignition key is operated to be turned on, an ignition state detection signal that indicates that the ignition key has been turned on (hereinafter referred to as an "ignition on state signal") is input to the power source control ECU 33. The power source control ECU 33 turns on the relay 51 when the ignition on state signal is input. When the ignition key is operated to be turned off, on the other hand, an ignition state detection signal that indicates that the ignition key has been turned off (hereinafter referred to as an "ignition off state signal") is input to the power source control ECU 33. The power source control ECU 33 turns off the relay 51 when the ignition off state signal is input.

The power source control ECU 33 controls on and off the four switching elements 52A, 52B, 53A, and 53B in the auxiliary power source device 32 on the basis of the detection values from the voltage sensors 61 and 62, the current sensor 63, and so forth. The power source control ECU 33 basically controls the four switching elements 52A, 52B, 53A, and 53B on the basis of main power source power PS. The main power source power PS is the actual power of the main power source 31 consumed by the EPS ECU 12 through assist control. The main power source power PS is calculated by computing the product of the main power source current ib which is detected by the current sensor 63 and the main power source voltage Vb which is detected by the first voltage sensor 61. The main power source power PS is an example of the "value that matches power consumption by the drive circuit".

Specifically, when the main power source power PS is less than an output voltage switching threshold KE determined in advance, the power source control ECU 33 turns off the upper switching element 53A in the discharge circuit 53, and turns on the lower switching element 53B, for example. Consequently, power is supplied to the motor drive circuit 42 by only the main power source 31. A power supply mode (power supply state) in which power is supplied to the EPS ECU 12 by only the main power source 31 in this way is occasionally referred to as a "normal output voltage mode (normal output voltage state)".

When the main power source power PS is less than the output voltage switching threshold KE, in addition, the power source control ECU 33 alternately turns on the pair of switching elements 52A and 52B in the charge circuit 52 as necessary. Consequently, the output voltage (main power source voltage) at the point of connection P1 is raised and applied to the capacitor 54. Consequently, the capacitor 54 is charged. When the main power source power PS is not less than the output voltage switching threshold KE, the power source control ECU 33 turns off the pair of switching elements 52A and 52B in the charge circuit 52. In addition, the power source control ECU 33 turns on the upper switching element 53A in the discharge circuit 53, and turns off the lower switching element 53B. Consequently, power is supplied to the motor drive circuit 42 by both the main power source 31 and the capacitor 54. In this case, a voltage obtained by adding the voltage of the capacitor 54 to the voltage of the main power source 31 is applied to the drive circuit 42.

The power source control ECU 33 may alternately turn on the pair of switching elements 53A and 53B in the discharge circuit 53 when the main power source power PS is not less than the output voltage switching threshold KE. Also in this case, power is supplied to the motor drive circuit 42 by both the main power source 31 and the capacitor 54. A power supply mode (power supply state) in which power is supplied to the EPS ECU 12 utilizing both the main power source 31 and the capacitor 54 in this way is occasionally referred to as a "high-output voltage mode (high-output voltage state)".

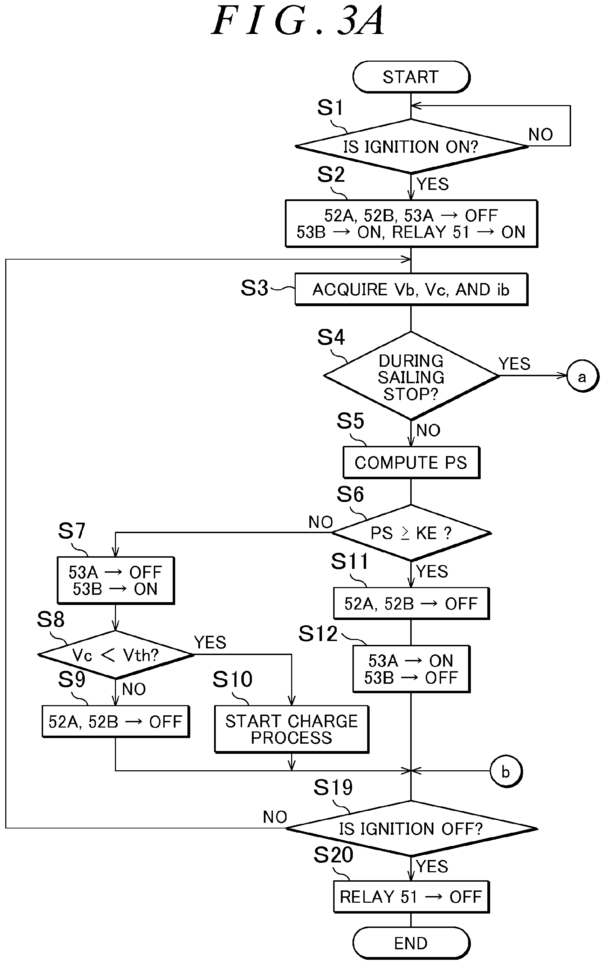

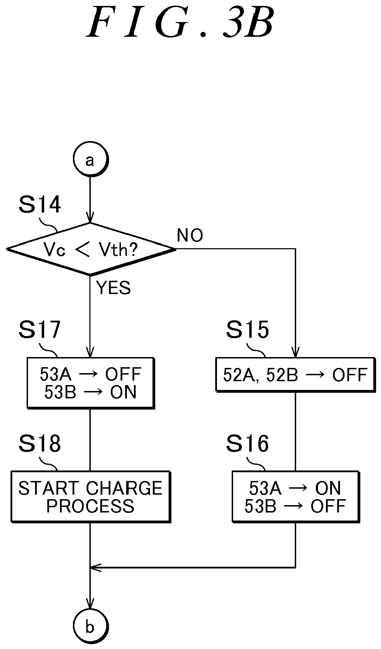

In the embodiment, the power source control ECU 33 sets the power supply mode to the high-output voltage mode if the terminal voltage (capacitor voltage) Vc of the capacitor 54 is equal to or more than a predetermined threshold Vth during the sailing stop (coasting). FIGS. 3A and 3B are each a flowchart illustrating operation of the power source control ECU 33.

When an ignition on state signal is input (step S1: YES), the power source control ECU 33 performs initial setting (step S2). In the initial setting, the power source control ECU 33 turns off the switching elements 52A, 52B, and 53A, turns on the switching element 53B, and turns on the relay 51. Consequently, the power supply mode is brought into the normal output voltage mode.

Next, the power source control ECU 33 acquires the main power source voltage Vb which is detected by the first voltage sensor 61, the capacitor voltage Vc which is detected by the second voltage sensor 62, and the main power source current ib which is detected by the current sensor 63 (step S3). Next, the power source control ECU 33 determines whether or not the sailing stop is being performed (step S4). In the case where the sailing stop is not being performed (step S4: NO), the power source control ECU 33 transitions to step S5.

In step S5, the power source control ECU 33 computes the main power source power PS by multiplying the main power source voltage Vd and the main power source current ib which are acquired in step S3. Then, the power source control ECU 33 determines whether or not the main power source power PS is equal to or more than the output voltage switching threshold KE (step S6).

In the case where the main power source power PS is not equal to or more than the output voltage switching threshold KE (step S6: NO), the power source control ECU 33 turns off the upper switching element 53A in the discharge circuit 53, and turns on the lower switching element 53B (step S7). Consequently, discharge of the capacitor 54 is stopped in the case where such discharge is executed. Consequently, in addition, the power supply mode is brought into the normal output voltage mode.

After that, the power source control ECU 33 determines whether or not the capacitor voltage Vc is less than a predetermined charge determination threshold Vth (Vth > 0) (step S8). This determination is made in order to prevent the capacitor 54 from being overcharged. The charge determination threshold Vth is set to a value that is equal to or slightly smaller than the upper limit voltage of the capacitor. In the case where the capacitor voltage Vc is not less than the charge determination threshold Vth (step S8: NO), the power source control ECU 33 turns off both the two switching elements 52A and 52B in the charge circuit 52 (step S9). Then, the power source control ECU 33 determines whether or not an ignition off state signal is input (step S19). If an ignition off state signal is not input (step S19: NO), the power source control ECU 33 returns to step S3.

In the case where it is determined in step S8 that the capacitor voltage Vc is less than the charge determination threshold Vth (step S8: YES), the power source control ECU 33 starts a charge process for the capacitor 54 (step S10). Specifically, the power source control ECU 33 alternately turns on the pair of switching elements 52A and 52B in the charge circuit 52. Consequently, the capacitor 54 is charged. In the case where a charge process has already been started when a transition is made from step S8 to step S10, the power source control ECU 33 continuously performs the charge process.

After that, the power source control ECU 33 transitions to step S19, and determines whether or not an ignition off state signal is input. If an ignition off state signal is not input (step S19: NO), the power source control ECU 33 returns to step S3. In the case where it is determined in step S6 that the main power source power PS is equal to or more than the output voltage switching threshold KE (step S6: YES), the power source control ECU 33 turns off both the two switching elements 52A and 52B in the charge circuit 52 (step S11). Consequently, the charge process is stopped in the case where the charge process is being executed.

Next, the power source control ECU 33 turns on the upper switching element 53A in the discharge circuit 53, and turns off the lower switching element 53B (step S12). Consequently, the power supply mode is brought into the high-output voltage mode. After that, the power source control ECU 33 transitions to step S19, and determines whether or not an ignition off state signal is input. If an ignition off state signal is not input (step S19: NO), the power source control ECU 33 returns to step S3.

In the case where it is determined in step S4 that the sailing stop is being performed (step S4: YES), the power source control ECU 33 transitions to step S14. In step S14, the power source control ECU 33 determines whether or not the capacitor voltage Vc is less than a charge determination threshold Vth. If the capacitor voltage Vc is not less than the charge determination threshold Vth (step S14: NO), the power source control ECU 33 turns off both the two switching elements 52A and 52B in the charge circuit 52 (step S15).

Next, the power source control ECU 33 turns on the upper switching element 53A in the discharge circuit 53, and turns off the lower switching element 53B (step S16). Consequently, the power supply mode is brought into the high-output voltage mode. After that, the power source control ECU 33 transitions to step S19, and determines whether or not an ignition off state signal is input. If an ignition off state signal is not input (step S19: NO), the power source control ECU 33 returns to step S3.

In the case where it is determined in step S14 that the capacitor voltage Vc is less than the charge determination threshold Vth (step S14: YES), the power source control ECU 33 turns off the upper switching element 53A in the discharge circuit 53, and turns on the lower switching element 53B (step S17). Consequently, discharge of the capacitor 54 is stopped in the case where such discharge is executed. Consequently, in addition, the power supply mode is brought into the normal output voltage mode.

After that, the power source control ECU 33 starts a charge process for the capacitor 54 (step S18). Specifically, the power source control ECU 33 alternately turns on the pair of switching elements 52A and 52B in the charge circuit 52. Consequently, the capacitor 54 is charged. After that, the power source control ECU 33 transitions to step S19, and determines whether or not an ignition off state signal is input. If an ignition off state signal is not input (step S19: NO), the power source control ECU 33 returns to step S3.

In the case where it is determined in step S19 that an ignition off state signal is input (step S19: YES), the power source control ECU 33 turns off the relay 51 (step S20). Then, the power source control ECU 33 ends the current processing. In the embodiment, if the capacitor voltage Vc is equal to or more than the charge determination threshold Vth during the sailing stop, the power supply mode is set to the high-output voltage mode (see steps S14, S15, and S16). Consequently, it is possible to suppress degradation of the assist function during the sailing stop.

While an embodiment of the present invention has been described above, the present invention may be implemented in other embodiments as well. In the embodiment discussed earlier, switching is made between the normal output voltage mode and the high-output voltage mode on the basis of whether or not the main power source power PS is equal to or more than the output voltage switching threshold KE. However, switching may be made between the normal output voltage mode and the high-output voltage mode on the basis of whether or not the power consumption by the EPS ECU 12 (power consumption by the motor drive circuit 42) is equal to or more than a predetermined output voltage switching threshold. The power consumption by the EPS ECU 12 (power consumption by the motor drive circuit 42) is an example of the "value that matches power consumption by the drive circuit".

In the embodiment discussed earlier, the auxiliary power source is constituted from one capacitor. However, the auxiliary power source may be constituted from a plurality of capacitors. Alternatively, the auxiliary power source may be constituted from one or a plurality of power source elements other than the capacitors. Examples of power source elements other than the capacitors include all-solid-state batteries, lithium-ion batteries, and so forth. In the embodiment discussed earlier, in addition, the power steering system according to the present invention is applied to an electric power steering system. However, the present invention is also applicable to any power steering system that includes an electric motor, such as a hydraulic power steering system of an electric pump type, other than an electric power steering system.

Besides, a variety of design changes may be made without departing from the scope described in the claims.

## Claims

1. A power steering system that is mounted on a vehicle that includes a sailing stop function and that includes an electric motor, the power steering system comprising:
a power source device; and
a control device that controls the power source device, wherein:
the power source device includes
a main power source,
an auxiliary power source, and
a switching circuit configured to switch a power supply mode between a first power supply mode, in which power is supplied to a drive circuit for the electric motor by only the main power source, and a second power supply mode, in which power is supplied to the drive circuit utilizing both the main power source and the auxiliary power source; and
the control device includes
a first control unit that controls the switching circuit on the basis of a value that matches power consumption by the drive circuit, and
a second control unit that switches the power supply mode to the second power supply mode by controlling the switching circuit during sailing stop.

2. The power steering system according to claim 1, wherein:
the power source device further includes a charge circuit configured to charge the auxiliary power source using the main power source; and
the second control unit includes
a unit that switches the power supply mode to the second power supply mode by controlling the switching circuit when a terminal voltage of the auxiliary power source is equal to or more than a predetermined threshold, and
a unit that switches the power supply mode to the first power supply mode by controlling the switching circuit and charges the auxiliary power source by controlling the charge circuit when the terminal voltage of the auxiliary power source is not equal to or more than the threshold.

3. The power steering system according to claim 1 or 2, wherein
the main power source is constituted from an alternator and a battery connected in parallel with the alternator.

4. The power steering system according to any one of claims 1 to 3, wherein
the auxiliary power source is composed of a capacitor.
